## Europäisches Patentamt
## European Patent Office
## Office européen des brevets

(19)

(11) Veröffentlichungsnummer: **0 048 295**
**B1**

(12) **EUROPÄISCHE PATENTSCHRIFT**

(45) Veröffentlichungstag der Patentschrift: **19.12.84**

(51) Int. Cl.³: **G 01 D 15/08**

(21) Anmeldenummer: **80105659.9**

(22) Anmeldetag: **20.09.80**

(54) **Verfahren und Anordnung zum Steuern des Schreibstromes bei Metallpapierdruckern.**

(43) Veröffentlichungstag der Anmeldung:
**31.03.82 Patentblatt 82/13**

(45) Bekanntmachung des Hinweises auf die
Patenterteilung:
**19.12.84 Patentblatt 84/51**

(84) Benannte Vertragsstaaten:
**DE FR GB**

(56) Entgegenhaltungen:
**DE-A-1 548 595**
**US-A-3 534 382**
**US-A-3 613 103**

**IBM TECHNICAL DISCLOSURE BULLETIN,**
**Band 17, Nr. 2, Juli 1974, Seiten 394, 395 New**
**York, U.S.A. L.V. GALETTO et al.: "Current**
**source control for electroerosion printing"**

(73) Patentinhaber: **IBM DEUTSCHLAND GMBH**
**Pascalstrasse 100**
**D-7000 Stuttgart 80 (DE)**
(84) **DE**

(73) Patentinhaber: **International Business Machines**
**Corporation**
**Old Orchard Road**
**Armonk, N.Y. 10504 (US)**
(84) **FR GB**

(72) Erfinder: **Bahr, Dietrich Jürgen, Dr.**
**Rheinstrasse 49**
**D-7033 Herrenberg (DE)**
Erfinder: **Goldrian, Gottfried A.**
**Gutacher Weg 18**
**D-7030 Böblingen (DE)**

(74) Vertreter: **Blutke, Klaus, Dipl.-Ing.**
**Schönaicher Strasse 220**
**D-7030 Böblingen (DE)**

EP 0 048 295 B1

Courier Press, Leamington Spa, England.

## Beschreibung

Die Erfindung betrifft ein Verfahren zur Informationsaufzeichnung mittels eines Metallpapier-Druckers, bei dem zwischen einer Schreibelektrode des Druckers und der Metallschicht eines als Aufzeichnungsträger dienenden Metallpapierstreifens eine Schreibspannung angelegt und die Metallschicht mittels eines resultierenden, zwischen Schreibelektrode und Metallschicht fließenden Schreibstroms unter Lichtbogenbildung ausgebrannt wird. Weiter betrifft die Erfindung einen Metallpapier-Drucker zur Durchführung dieses Verfahrens.

Im IBM Technical Disclosure Bulletin, Band 17, Nr. 2, Juli 1974, S. 394, 395 ist eine Anordnung zur Steuerung des Stromes für Metallpapier-Drucker beschrieben. Dabei wird der durch eine Darlington-Schaltung fließende Strom dadurch begrenzt, daß einem von diesem Strom durchflossenen Vorwiderstand eine Steuerspannung und die Basis-Emitterstrecke eines Transistors parallelgeschaltet sind. Diese Steuerspannung kann einen festen Wert haben oder manuell oder dynamisch gesteuert werden.

In herkömmlichen Treiberkreisen für die Vorgabe der Schreibspannung bzw. des Schreibstromes waren ein Schalttransistor mit einem strombegrenzenden Widerstand vorgesehen. Mit dieser ursprünglichen Lösung ließen sich relativ dünne Metallschichten gut ausbrennen, doch ergaben sich für dickere Metallschichten Fehlstellen (nicht ausgebrannte Stellen). Die Ursache dieser Fehlstellen lag darin, daß der Maximalstrom (in Folge des strombegrenzenden Widerstandes bei vorgegebener Spannung) nicht ausreichend war. Eine entsprechende Erhöhung der Schreibspannung und damit auch des Schreibstromes hätten allerdings bewirkt, daß dünnere Metallschichten in unzulässig storender Weise einem viel zu großen Ausbrand unterworfen worden wären. Für Metallpapiere mit einem größeren Toleranzbereich für die Stärke der aufgedampften Metallschicht hätte sich somit eine ungenügende Schriftqualität ergeben: entweder durch Fehlstellen an den dickeren Stellen der Metallschicht oder durch übergroß ausgebrannte Stellen an den dünneren Teilen der Metallschicht.

Es ist somit Aufgabe der Erfindung, ein Verfahren und eine Anordnung zur Informationsaufzeichnung mittels eines Metallpapier-Druckers vorzugeben, welche bei stark variierender Dicke der Metallschicht des Aufzeichnungsträgers eine ausreichende Druckqualität garantieren.

Diese Aufgabe der Erfindung wird in vorteilhafter Weise durch die in den Ansprüchen 1 bzw. 3 genannten Maßnahmen gelöst. Vorteilhafte Weiterbildungen der Erfindung sind den Unteransprüchen zu entnehmen.

Das erfindungsgemäße Verfahren und eine Anordnung zur Durchführung des Verfahrens sind in den Zeichnungen dargestellt und werden im folgenden näher beschrieben.

Es zeigen:

Fig. 1 eine schematische Darstellung zur Steuerung des Schreibstromes in Abhängigkeit von der Zeit für eine dünne und eine dicke Metallschicht.

Fig. 2A Prinzipschaltbild einer ersten Schaltung zur Steuerung des Schreibstromes bei Metallpapier-Druckern.

Fig. 2B Darstellung eines Schaltungsteils zum Modifizieren der Schaltung nach Fig. 2A zur Ausschaltung elektrischen Schwingverhaltens.

Fig. 3 Prinzipschaltbild einer zweiten Schaltung zur Steuerung des Schreibstromes bei Metallpapier-Druckern und

Fig. 4 Prinzipschaltbild einer dritten Schaltung zur Steuerung des Schreibstromes bei Metallpapier-Druckern.

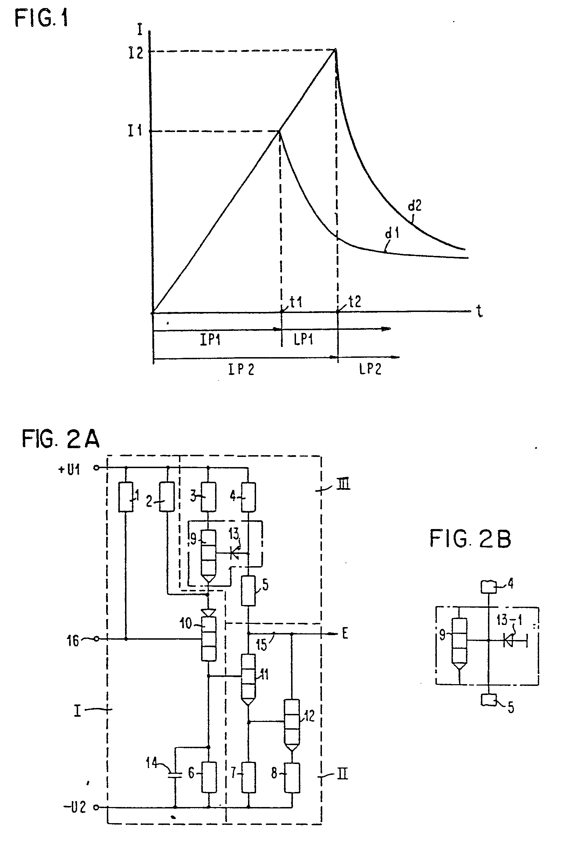

In Fig. 1 ist gezeigt, in welcher Weise der Schreibstrom in Abhängigkeit von der Zeit t gesteuert werden soll. Das Ansteigen des Stromes bis zu seinem Höchstwert entspricht der sogenannten Zündphase des Lichtbogens. Nach der Zündung des Lichtbogens und dem Erreichen des maximalen Stromwertes soll das Ausbrennen der Metallschicht mit einem schnell abfallendem Strom kontrolliert erfolgen. Das Zünden des Lichtbogens erfordert einen sehr hohen Strom, der im Maximum bis auf das Zehnfache des Lichtbogenstromes ansteigen kann. Dieser Zündstrom muß mit einer fest definierten Geschwindigkeit ansteigen und sofort beim Start des Lichtbogens auf niedrigere Werte abfallen. Das erfolgreiche Zünden des Lichtbogens wird an der Elektrodenspannung erkannt. Vor dem Zünden liegt die Schreibelektrode auf der Metallschicht des Aufzeichnungsträgers auf und liegt somit an Masse. Zum Zeitpunkt des Zündens des Lichtbogens weist die Elektrode eine negative Spannung auf, wie sie zum Betreiben des Lichtbogens benötigt werden soll. Diese Spannung wird von einer Schaltung zur weiteren Steuerung des Lichtbogenstromes erkannt. Der erwünschte Stromverlauf während der Zündphase des Bogens und während der nachfolgenden eigentlichen Lichtbogenphase ist in Fig. 1 sowohl für eine dünne Metallschicht (Parameter d1) als auch für eine dickere Metallschicht (Parameter d2) dargestellt. Für den Verlauf d1 steigt der Strom während der Phase IP1 zunächst bis auf einen Maximalwert I1 an, wie er zur Ausbildung eines Lichtbogens erforderlich ist. Diesen Wert erreicht der Strom zum Zeitpunkt t1. Um ein kontrolliertes Ausbrennen der Metallschicht zu gewährleisten, wird anschließend der Strom sofort auf geringere Werte abgesenkt.

Bei dickeren Metallschichten entsprechend dem Verlauf d2 — baut sich der Lichtbogen erste bei einem höheren mit I2 gekennzeichneten Stromwert zum Zeitpunkt t2 auf, wonach der Lichtbogenstrom für das weitere kontrollierte Ausbrennen der Metallschicht erniedrigt wird.

Die Anstiegzeit des Stromes bis es zur Ausbildung eines Lichtbogens kommt entspricht t1 (Zündphase IP1) bzw. t2 (Zündphase IP2). Die daran anschließende eigentliche Lichtbogenphase für ein kontrolliertes Ausbrennen der Metallschicht ist mit LP1 bzw. LP2 gekennzeichnet.

In Fig. 2A ist eine Schaltung gezeigt, mit der sich der in Fig. 1 dargestellte Stromverlauf als Ergebnis einer Steuerung des Lichtbogenstromes realisieren läßt. Diese Schaltung besteht aus drei Teilen: Teil I, der der eigentlichen Stromsteuerung dient, Teil II, der als Emitterfolger dient und Teil III mit der Funktion eines Stromschalters.

Im ausgeschalteten Zustand liegt am Eingang 16 der Schaltung eine positive Spannung von z.B. +5 Volt. Diese Spannung soll im Zusammenhang mit den verwendeten in Serie geschalteten Transistoren 9 (npn Typ) und 10 (pnp Typ) eine Sperrung dieser Transistoren bewirken. Ein negativer Eingangsimpuls auf den Eingang 16 schaltet den Transistor 10 ein. Da der Transistor 9 über die Diode 13 und den durch die Widerstände 4 und 5 gebildeten Spannungsteiler positiv vorgespannt ist, wird dieser Transistor 9 bei Auftreten eines negativen Eingangsimpulses leitend. Daraufhin fließt der maximal mögliche Kollektorstrom des Transistors 10, dessen Größe durch die Widerstände 2 und 3 bestimmt wird. (Dem Kollektorwiderstand 3 des Transistors 9 ist der Widerstand 2 parallel geschaltet.) Mit diesem Strom wird der Kondensator 14 aufgeladen, der dem Kollektorwiderstand 6 des Transistors 10 parallel liegt. Von einem bestimmten Schwellwert von z.B. 1,5 Volt an fließt ein Strom durch den Leistungstransistor 12. Die Höhe dieses Stromes wird durch den Emitterwiderstand 8 bestimmt.

Zur Spannungsversorgung der Schaltung liegt das Transistor 9 ferne Ende des Kollektorwiderstandes 3 an einer positiven Spannung +U1, z.B. +5 Volt, und das Transistor 10 ferne Ende des Kollektorwiderstandes an einer negativen Spannung —U2 z.B. —42 Volt.

Die Leitung 15 ist mit der Schreibelektrode E verbunden. Diese liegt auf der Metallschicht des Aufzeichnungsträgers auf. Erreicht die Stromdichte am Übergang Elektrode/Metallschicht einen kritischen Wert, dann bildet sich ein Loch in der Metallschicht und eine negative Lichtbogenspannung baut sich auf. Diese negative Spannung wird von der Schaltung über die Leitung 15 erkannt; sie sperrt die Diode 13 über den von den Widerständen 5 und 4 gebildeten Spannungsteiler und schaltet damit den Transistor 9 aus.

Zu diesem Zeitpunkt wird der Strom durch den Transistor 10 dann nur noch durch den hochohmigen Widerstand 2 bestimmt; er geht auf einen Bruchteil des alten Wertes (als noch ein Stromfluß durch den Transistor 9 erfolgte) zurück. Der Kondensator 14 entlädt sich bis zu einer Spannung, die durch den Widerstand 6 bestimmt wird. Der Strom über die einen Emitterfolger bildenden Transistoren 11 und 12 folgt dieser Spannung bis das Abreißen des Lichtbogens einen weiteren Stromfluß unterbindet.

Diese Schaltung gestaltet somit den Ausbrennvorgang hinsichtlich der Lichtbogenstromstärke dynamisch. Zu Beginn des Ausbrennens wird ein relativ hoher Strom vorgegeben der ausreicht auch die dicksten vorkommenden Metallschichten auszubrennen. Bei der Fortführung des Ausbrennvorganges wird beim Erreichen einer bestimmten Lichtbogenspannung der Schreibstrom in kürzester Zeit reduziert, so daß zwar der Lichtbogen noch aufrecht erhalten wird, aber ein unerwünschtes den Schreibfleck erweiterndes Ausbrennen vermieden wird. Für dünnere Metallschichten muß das Absenken des während der Zündphase auftretenden Maximalstromes bereits zu einem früheren Zeitpunkt als bei dickeren Metallschichten erfolgen. Die selbstätige Einstellung des maximalen Brennstromes auf die Stärke der Metallschicht erfolgt über die Messung der Lichtbogenspannung zwischen Elektrode und Metallschicht. Auf diese Weise ist es möglich, Metallpapiere mit stark variierender Metallschichtdicke zu verwenden und eine zufriedenstellende Druckqualität zu erlangen.

Die in Fig. 2A gezeigte Schaltung wurde ausgetestet. Sie funktioniert einwandfrei solange die Diode 13 entsprechend "langsam" ist. Das heißt, der Sperrstrom der Diode 13 muß größer als der Ausräumstrom der Basis des Transistors 9 sein. Andernfalls käme es zu Schwingungen, die die gewünschte Funktion der Schaltung verhindern würden.

Dieses kritische Verhalten der in Fig. 2A gezeigten Schaltung bei nicht entsprechender Auswahl der Diode 13 läßt sich dadurch vermeiden, daß der in Fig. 2A mit Strich-Punkt markierte Schaltungsteil durch den in Fig. 2B gezeigten ersetzt wird. Danach ist die Basis des Transistors 9 direkt mit dem Spannungsteilerpunkt zwischen den Widerständen 4 und 5 verbunden und diese Verbindungsstelle über eine Diode 13-1 an Masse gelegt.

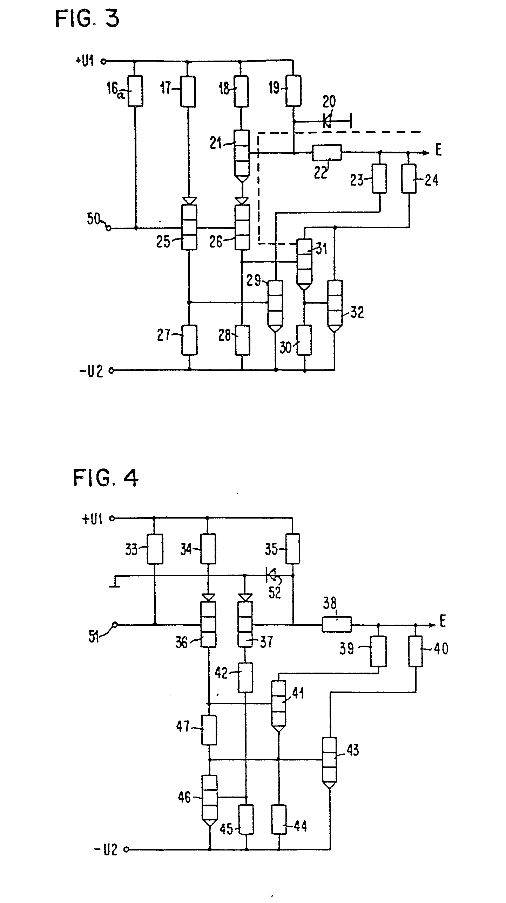

Während bei der in Fig. 2A bzw. in Fig. 2B beschriebenen Schaltung die Verlustleistung relativ hoch ist, ist in den Schaltungen gemäß Fig. 3 und 4 die Verlustleistung gering, wodurch eine Integrierung möglich gemacht wird.

Während in der Schaltung nach Fig. 2A der Transistor 12 einen eingeprägten Schreibstrom an die Elektrode E liefert, wird bei vergleichsweiser Betrachtung der in Fig. 3 mit 32 bezeichnete Transistor in Sättigung betrieben. Er liegt mit seinem Emitter direkt an einer Spannung —U2 (z.B. —42 Volt); die Höhe des Transistorstromes wird durch den Widerstand 24 und durch die an der Elektrode E auftretende Spannung bestimmt. Letztere wirkt sich vermindernd auf den durch den Transistor 32 fließenden Strom aus. Zur Lichtbogenzündung wird zusätzlich der Transistor 31 angeschaltet (Einschaltsignal an Klemme 50), dessen Strom sich dem durch den Transistor 32 fließenden Strom überlagert. Eine zusätzliche Erhöhung des Zündstromes ist durch den für den Zündvorgang eingeschalteten Transistor 29 gegeben, dessen Strom durch den Kollektorwiderstand 23 mitbestimmt wird. Beim Anlegen eines Eingangssignals an Klemme 50 fließen über die Transistoren 25 und 26 Ströme, wodurch die Transistoren 29 und 32 in den leitenden Zustand gesteuert werden. Beim Auftreten einer bestimmten Elektrodenspannung wird über den gestrichelt dargestellten Weg der Transistor 31 abgeschaltet und damit der Transistor 32 gesperrt. Der aus den Elementen Transistor 21, den Widerständen 19, 22 und der Diode 20 bestehende Schaltungsteil entspricht in seiner Funktion dem in Fig. 2B gezeigten Schaltungsteil, so daß auf seine Wirkungsweise an dieser Stelle nicht weiter detailliert eingegangen wird. Der Transistor 25 liegt über den Widerstand 17 an der positiven Versorgungsspannung +U1, z.B. +5 Volt, und über den Widerstand 27 an der negativen Versorgungsspannung —U2. Er wird über Anschluß 50 an seiner Basis angesteuert. Zwischen Basis und positiver Versorgungsspannung liegt der Widerstand 16a. Ebenso über seine Basis angesteuert wird der Transistor 26, dem der Transistor 21 und ein Widerstand 18 bis zur positiven Versorgungsspannung +U1 bzw. ein Widerstand 28 bis zur negativen Versorgungsspannung —U2 nachgeschaltet ist. Die Kollektorleitung des Transistors 25 ist mit der Basis des Transistors 29, die des Transistors 26 mit der Basis des Transistors 31 verbunden. Der Emitter des Transistors 31 ist über den Widerstand 30 mit der negativen Versorgungsspannung verbunden.

Die in Fig. 4 dargestellte Schaltung ist aus Gründen geringerer Verlustleistung noch besser integrierbar, als die in Fig. 3. Zwischen einer positiven Versorgungsspannung +U1 und einer negativen Versorgungsspannung —U2 liegt die Serienschaltung eines Widerstandes 34, eines Transistors 36, eines Widerstandes 47 und eines Transistors 46. Zwischen der positiven Versorgungsspannung +U1 und der Basis des Transistors 36 liegt ein Widerstand 33. Der Transistor 36 erhält sein Einschaltsignal über den Anschluß 51. Die Elektrode E ist über einen Widerstand 38 mit der Basis des Transistors 37 verbunden; über einen Widerstand 39, einen Transistor 41 und einen Widerstand 44 mit der negativen Versorgungsspannung —U2 und über einen Widerstand 40 und einen Transistor 43 ebenfalls mit der negativen Versorgungsspannung —U2. Die Basis des Transistors 41 ist mit der zwischen dem Transistor 36 und dem Widerstand 47 liegenden Leitung; die Basis des Transistors 43 ist mit der zwischen dem Transistor 41 und dem Widerstand 44 bzw. zwischen dem Widerstand 47 und dem Transistor 46 liegenden Leitung verbunden. Das elektroden ferne Ende des Widerstandes 38 liegt über einen Widerstand 35 an der positiven Versorgungsspannung +U1. Das elektroden nahe Ende des Widerstandes 35 ist über eine Diode 52 mit dem Emitter des Transistors 37, der an Masse liegt, verbunden. Der Kollektor des Transistors 37 ist über einen Widerstand 42 und einen Widerstand 45 mit der negativen Versorgungsspannung —U2 verbunden, wobei die zwischen den Widerständen 42 und 45 liegende Leitung mit der Basis des Transistors 46 verbunden ist. Beim Einschalten durch Anlegen eines Steuerimpulses über den Anschluß 51 fließt ein Strom durch den Transistor 36 und die Widerstände 47 und 34. Dadurch werden die Transistoren 41 und 43 in den Sättigungsmodus gebracht und beim Aufbau einer Elektrodenspannung wird über den Widerstand 38 der Transistor 37 erstmals leitend. Dadurch wird der Transistor 46 in den leitenden Zustand gesteuert. Durch den leitenden Transistor 46 wird nun der Transistor 43 ausgeschaltet, so daß nur noch der Transistor 41 für die Vorgabe des Lichtbogenstromes zuständig ist. Da der Transistor 43 nicht in Darlington Schaltung arbeitet kann er voll auf seine Kollektor-Emitterspannung durchschalten. (Dieses wäre bei einer Schaltung nach Fig. 3 wegen der Darlington Konfiguration der Transistoren 31 und 32 nicht möglich.)

In Fig. 4 benötigt der Transistor 43 einen hohen Basisstrom, der von Transistor 41 geliefert wird. Transistor 41 gilt gleichzeitig als Lichtbogenstromlieferant. (Bei der Schaltung nach Fig. 3 is dies beim Transistor 31 nicht der Fall, weil hier eine Trennung zwischen den Transistoren 31, 32 und 29 aus prinzipiellen Gründen (Darlington Schaltung) erforderlich ist.)

Zur Vermeidung eines möglichen Schwingverhaltens kann dem Widerstand 27 in Fig. 3 bzw. dem Widerstand 47 und dem Transistor 46 in Fig. 4 eine Kapazität parallel geschaltet sein.

**Patentansprüche**

1. Verfahren zur Informationsaufzeichnung mittels eines Metallpapier-Druckers, bei dem zwischen einer Schreibelektrode (E) des Druckers und der Metallschicht eines als Aufzeichnungsträger dienenden Metallpapierstreifens eine Schreibspannung angelegt und die Metallschicht mittels eines resultierenden, zwischen Schreibelektrode und Metallschicht fließenden Schreibstroms unter Lichtbogenbildung ausgebrannt wird, dadurch gekennzeichnet, daß der Schreibstrom während des Ausbrennens der Metallschicht under den beim Zünden des Lichtbogens gegebenen Wert reduziert wird.

2. Verfahren nach Anspruch 1, dadurch gekennzeichnet, daß die Reduzierung des Schreibstromes bei Erreichen einer vorgegebenen zwischen Schreibelektrode und Metallschicht gemessenen Schreibspannung eingeleitet wird.

3. Metallpapier-Drucker zur Durchführung des Verfahrens nach einem der vorhergehenden Ansprüche, mit einer Schaltungsanordnung zur Anlegung einer Schreibspannung zwischen eine Schreibelektrode (E) des Druckers und die Metallschicht eines als Aufzeichnungsträger dienenden Metallpapiers und mit einer spannungsgesteuerten Stromsteuerschaltung (1—16; 16a, 17—32; 33—47, 51, 52) zur Steuerung eines zwischen der Schreibelektrode und der Metallschicht unter Lichtbogenbildung fließenden Schreibstroms, dadurch gekennzeichnet, daß die Stromsteuerschaltung (1—16; 16a, 17—32; 33—47, 51, 52) von der Schreibspannung derart gesteuert ist, daß der Schreibstrom bei Auftreten einer vorgegebenen Schreibspannung unter die bei Zündung des Lichtbogens gegebene Stromstärke reduziert wird.

4. Metallpapier-Drucker nach Anspruch 3, gekennzeichnet durch zwei in Serie geschaltete Transistoren (9, 10), von denen einer (9) zu einem Widerstand (2) parallel geschaltet ist und beim Auftreten des vorgegebenen Wertes der Schreibspannung in den nichtleitenden Zustand gesteuert wird, wodurch der Stromfluß durch den zweiten Transistor (10) auf einen Wert reduziert wird, der von der Größe des dem ersten Transistor (9) parallel geschalteten Widerstandes (2) abhängt und durch einen Emitterfolger (11, 12), über den dieser Strom der Elektrode (E) zur Aufrechterhaltung des Lichtbogens zugeführt ist.

5. Metallpapier-Drucker nach Anspruch 4, dadurch gekennzeichnet, daß das Ausschalten des ersten Transistors (9) beim Auftreten der vorgegebenen Schreibspannung über einen Spannungsteiler (4, 5) und eine zwischen den Teilerpunkt und die Basis des Transistors (9) gelegt Diode (13) erfolgt.

6. Metallpapier-Drucker nach Anspruch 4, dadurch gekennzeichnet, daß das Ausschalten des ersten Transistors (9) beim Auftreten der vorgegebenen Schreibspannung über einen Spannungsteiler (4, 5) erfolgt, dessen Teilerpunkt mit der Basis des Transistors (9) sowie über eine Diode (13-1) mit Masse verbunden ist.

7. Metallpapier-Drucker nach Anspruch 3, gekennzeichnet durch einen im Sättigungsbereich betriebenen und mit der Elektrode (E) verbundenen Transistor (29) sowie eine zum Transistor (29) parallel geschaltete Darlington-Schaltung zweier weiterer im Sättigungsbereich betriebener Transistoren (31 und 32), welche Darlington-Schaltung beim Auftreten einer bestimmten Schreibspannung ausgeschaltet wird, so daß der zur Aufrechterhaltung des Lichtbogens gelieferte Strom nur noch von dem Transistor (29) geliefert wird.

8. Anordnung nach Anspruch 3, gekennzeichnet durch einen im Sättigungsbereich betriebenen mit der Elektrode (E) verbundenen ersten Transistor (43) und einen zweiten Transistor (41), der im Sättigungsmodus betrieben wird und mit der Elektrode (E) verbunden ist, wobei der Emitter des zweiten Transistors (41) mit der Basis des erstgenannten Transistors (43) und mit einem Vorwiderstand (44) verbunden ist, wobei beim Auftreten einer bestimmten Schreibspannung der erste Transistor (43) in den nichtleitenden Zustand gesteuert wird und der Transistor (41) den zur Aufrechterhaltung des Lichtbogens erforderlichen Strom an die Elektrode liefert.

9. Metallpapier-Drucker nach Anspruch 7 oder 8, dadurch gekennzeichnet, daß die Schaltungsanordnung als integrierte Schaltung ausgeführt ist.

**Revendications**

1. Procédé d'écriture d'informations au moyen d'une imprimante de papier métallisé, dans lequel une tension d'inscription est appliquée entre une électrode d'inscription (E) de l'imprimante et la couche métallisée d'une bande de papier métallisé servant de support d'écriture et la couche métallisée est brûlée avec formation d'arc électrique au moyen d'un courant d'inscription résultant, passant entre l'électrode d'inscription et la couche métallisée, caractérisé en ce que le courant d'inscription est réduit pendant le brûlage de la couche métallisée en dessous de la valeur établie lors de l'amorçage de l'arc électrique.

2. Procédé selon la revendication 1, caractérisé en ce que la réduction du courant d'inscription est enclenchée lors de l'atteinte d'une tension d'inscription prédéterminée, mesurée entre l'électrode d'inscription et la couche métallisée.

3. Imprimante de papier métallisé pour la mise en oeuvre du procédé selon l'une quelconque des revendications précédentes, comportant un agencement de circuit pour l'application d'une tension d'inscription entre une électrode d'inscription (E) de l'imprimante et la couche métallisée d'un papier métallisé servant de support d'enregistrement et avec un circuit de commande de courant commandé par tension (1—16; 16a, 17—32; 33—47, 51, 52) pour la commande d'un courant d'inscription passant entre l'électrode d'inscription et la couche métallisée avec formation d'arc électrique, caractérisée en ce que le circuit de commande de courant (1—16; 16a, 17—32; 33—47, 51, 52) est commandé par la tension d'inscription de telle sorte que le courant d'inscription soit réduit, lors de la production d'une tension d'inscription prédéterminée, en dessous de l'intensité de courant établie lors de l'amorçage de l'arc électrique.

4. Imprimante de papier métallisé selon la revendication 3, caractérisée par deux transistors (9, 10) branchés en série, dont l'un (9) est branché en parallèle avec une résistance (2) et est rendu non conducteur lors de l'établissement de la valeur prédéterminée de la tension d'inscription, ce qui réduit le passage du courant dans le second transistor (10) à une valeur qui est fonction de la grandeur de la résistance (2) branchée en parallèle au premier transistor (9), et par un émetteur suiveur (11, 12) par l'intermédiaire duquel ce courant est appliqué à l'électrode (E) pour maintenir l'arc électrique.

5. Imprimante de papier métallisé selon la revendication 4, caractérisée en ce que le blocage du premier transsistor (9) lors de l'établissement de la tension prédéterminée d'inscription est assuré par l'intermédiaire d'un diviseur de tension (4, 5) et d'une diode (13) branchée entre le point de jonction et la base du transistor (9).

6. Imprimante de papier métallisé selon la revendication 4, caractérisée en ce que le blocage du premier transistor (9) s'effectue lors de l'établissement de la tension prédéterminée d'inscription par l'intermédiaire d'un diviseur de tension (4, 5) dont le point de jonction est relié à la base du transistor (9) et également, par l'intermédiaire d'un diode (13-1) à la masse.

7. Imprimante de papier métallisé selon la revendication 3, caractérisée par un transistor (29) opérant dans le domaine de saturation et relié à l'électrode (E) ainsi que par un circuit de Darlington formé deux autres transistors (31 et 32) opérant dans le domaine de saturation et branché en parallèle au transistor (29), ledit circuit de Darlington étant bloqué lors de l'établissement d'une tension déterminée d'inscription de manière que le courant fourni pour maintenir l'arc électrique puisse seulement être produit encore par le transistor (29).

8. Dispositif selon la revendication 3, caractérisé par un premier transistor (43) opérant dans le domaine de saturation et relié à l'électrode (E) et par un second transistor (41), qui opère dans le mode de saturation et qui est relié à l'électrode (E), l'émetteur du second transistor (41) étant relié à la base du transistor (43) cité en premier ainsi qu'avec une résistance-série (44) et, lors de l'établissement d'une tension déterminée d'inscription, le premier transistor (43) est commuté dans la condition de blocage tandis que le transistor (41) fournit à l'électrode le courant nécessaire pour le maintien de l'arc électrique.

9. Imprimante de papier métallisé selon la revendication 7 ou 8, caractérisée en ce que le circuit est réalisé sous forme d'un circuit intégré.

## Claims

1. Method for information recording by means of a metal paper printer, wherein a print voltage is applied between a print electrode (E) of the printer and the metal layer of a metal paper strip serving as a record carrier, and the metal layer is burnt out, while forming an arc, by a resultant print current flowing between print electrode and metal layer, characterized in that during the burning out of the metal layer, the print current is reduced to a value below that existing when the arc is initiated.

2. Method according to claim 1, characterized in that the reduction of the print current is initiated when a predetermined print voltage measured between print electrode and metal layer is reached.

3. Metal paper printer for implementing the method according to any preceding claim, comprising

a circuit for applying a print voltage between a print electrode (E) of the printer and the metal layer of a metal paper serving as a record carrier, and

a voltage-controlled current control circuit (1—16; 16a, 17—32; 33—47, 51, 52) for controlling a print current flowing between the print electrode and the metal layer while an arc is formed, characterized in that the current control circuit (1—16; 16a, 17—32; 33—47, 51, 52) is controlled by the print voltage such that upon the occurrence of a predetermined print voltage, the print current is reduced to the current value existing when the arc is initiated.

4. Metal paper printer according to claim 3, characterized by two series-connected transistors (9, 10), one transistor (9) of which connected in parallel to a resistor (2) is made non-conductive when a predetermined value of the print voltage is reached, causing the current flow through the second transistor (10) to be reduced to a value that depends on the magnitude of the resistor (2) switched in parallel to the first transistor (9), and by an emitter follower (11, 12), by which said current is fed to the electrode (E) for maintaining the arc.

5. Metal paper printer according to claim 4, characterized in that upon the occurrence of the predetermined print voltage, the first transistor (9) is switched off via a voltage divider (4, 5) and a diode (13) connected between the tap and the base of the transistor (9).

6. Metal paper printer according to claim 4, characterized in that upon the occurrence of the predetermined print voltage, the first transistor (9) is switched off via a voltage divider (4, 5), whose tap is connected respectively to the base of the transistor (9) and to ground via a diode (13-1).

7. Metal paper printer according to claim 3, characterized by a transistor (29) which is saturated and connected to the electrode (E), as well as a Darlington circuit of two transistors (31 and 32) which are saturated and switched in parallel to transistor (29), said Darlington circuit being switched off upon the occurrence of a particular print voltage, so that the current supplied for maintaining the arc is supplied only by transistor (29).

8. Printer according to claim 3, characterized by a transistor (43) which is saturated and connected to the electrode (E), and a second transistor (41) which is saturated and connected to the electrode (E), wherein the emitter of the second transistor (41) is connected to the base of the first transistor (43) and to a series resistor (44), wherein, upon the occurrence of a particular print voltage, the first transistor (43) is made non-conductive, and the transistor (41) supplies the current necessary for maintaining the arc to the electrode.

9. Metal paper printer according to claim 7 or 8, characterized in that the circuit is designed as an integrated circuit.

FIG. 1

FIG. 2A

FIG. 2B

FIG. 3

FIG. 4